# EUROPÄISCHE PATENTSCHRIFT

(11) **EP 0 566 962 B1**
(45) Veröffentlichungstag und Bekanntmachung des Hinweises auf die Patenterteilung: **08.01.2003**
(21) Anmeldenummer: 93105981.0
(22) Anmeldetag: 13.04.1993
(51) Int. Cl.: H04L 12/56, H04Q 11/04

(54) **Verfahren zur Überwachung von virtuellen Verbindungen innerhalb eines digitalen Fernmeldenetzes**
Method for monitoring virtual connections in digital telecom networks
Procédé pour surveiller des connections virtuelles dans des réseaux numériques de communication

(30) Priorität: 24.04.1992 DE 4213628
(43) Veröffentlichungstag der Anmeldung: 27.10.1993
(73) Patentinhaber: SIEMENS AKTIENGESELLSCHAFT, 80333 München (DE)
(72) Erfinder: Hoffmann, Robert, W-8024 Oberhaching (DE); Clark, Mark, W-8000 München 70 (DE)

(56) Entgegenhaltungen:
- EP-A- 0 477 553
- IEEE JOURNAL ON SELECTED AREAS IN COMMUNICATIONS, Bd. 9, Nr. 9, 1.Dezember 1991, Seiten 1484-1495, XP000267538 SUBRAHMANYAM DRAVIDA ET AL: "ERROR DETECTION AND CORRECTION OPTIONS FOR DATA SERVICES IN B-ISDN"
- TELCOM REPORT, Bd. 14, Nr. 1, 1.Januar 1991, Seiten 52-55, XP000177880 ARWEILER H W: "UBERTRAGUNGSQUALITAET IM B-ISDN INTERNATIONAL SICHERSTELLEN"

## Beschreibung

Die Erfindung betrifft ein Verfahren zur Überwachung von virtuellen Verbindungen innerhalb eines digitalen Fernmeldenetzes, das aus im asynchronen Transfermodus (ATM) arbeitenden Vermittlungsstellen gebildet ist, über die auch im synchronen Transfermodus (STM) übertragene Informationen vermittelt werden können.

Bei einem solchen Verfahren (siehe EP-A-0 477 553) wird jeweils am Ursprungsort der virtuelle Verbindung führenden Übertragungsstrecke den zu übertragenden, einen Zellenkopf und einen Informationsteil umfassenden Informationszellenblöcken jeweils eine Überwachungszelle zugeordnet, die ggf. ein Reihenfolgekennzeichen, eine Angabe über die Länge des Informationszellenblockes auf jeden Fall aber ein Fehlererkennungscodewort enthält. Jeweils am Endpunkt der betreffenden Übertragungsstrecke kann durch erneute Bildung eines Fehlererkennungscodewortes und durch Vergleich desselben mit dem vom Ursprungsort her übertragenen Fehlererkennungscodewort eine Informationsverfälschung erkannt werden, wobei im Fehlerfall eine Meldung zumindest an den Ursprungsort der betreffenden Übertragungsstrecke erfolgt.

Auf diese Weise kann das fehlerhafte Einfügen von Informationszellen in den Informationsstrom, der Verlust solcher Informationszellen, sowie die Verfälschung von Informationszellenblöcken im Zuge der Übertragung auf den Übertragungsstrecken erkannt werden.

Die Aufgabe der Erfindung besteht nun darin, ein solches Verfahren so auszugestalten, daß auch innerhalb der auf ATM-Basis arbeitenden Vermittlungsstellen, die das eingangs genannte Netz bilden, der Aufbau und die korrekte Abwicklung der Verbindungsdurchschaltung überwacht werden kann.

Diese Aufgabe wird durch die im Kennzeichen des Patentanspruchs 1 angegebenen Merkmale gelöst.

Durch die Erfindung wird also die Überwachung virtueller Verbindungen auf den Übertragungsstrecken von und zu sowie zwischen den Vermittlungsstellen unter Ausnutzung der hierfür geschaffenen Instrumente durch eine Verbindungsüberwachung innerhalb der Vermittlungsstelle ergänzt. Dies ist insbesondere dadurch möglich, daß bei der Bildung des Fehlererkennungskodewortes der Zellenkopfinhalt der Informationszellen der sich beim Durchlauf durch das Koppelfeld der Vermittlungsstelle ändern kann, unberücksichtigt bleibt.

Gemäß einer weiteren Ausgestaltung der Erfindung wird jeweils an der Zugangsgrenze zu einer Vermittlungsstelle in die Durchgangsüberwachungszellen eine auf den Vermittlungsstellenzugang bezogene Ursprungsadresse eingefügt. An den Vermittlungsstellenausgängen wird dann eine Überwachung auf das jeweilige Auftreten der betreffenden erwarteten Ursprungsadresse vorgenommen, ferner wird an der Zugangsgrenze ein Prüfkennzeichen in die Durchgangsüberwachungszellen eingefügt, das im Verbindungsaufbauzustand Informationszellen des zugehörigen Informationszellenblocks als Leerzellen kennzeichnet und die Auswertung bzw. Neubildung eines Fehlererkennungskodewortes verhindert.

Aufgrund dieser Ausgestaltung der Erfindung kann im Verbindungsaufbauzustand das ordnungsgemäße Zustandekommen der Verbindungen sowie das fehlerhafte Zustandekommen von Doppelverbindungen erkannt werden, ferner sind im Zustand aufgebauter Verbindungen Verbindungsverluste und Durchschaltefehler feststellbar.

Gemäß noch einer anderen Ausgestaltung der Erfindung.führt eine Fehlermeldung aufgrund der Nichtübereinstimmung verglichener Fehlererkennungskodeworte erst nach mehrmaliger Wiederholung einer Nichtübereinstimmung, eine Fehlermeldung aufgrund des Ausbleibens einer Ursprungsadresse oder aufgrund des Empfangs einer anderen als der erwarteten Ursprungsadresse jedoch sofort zu einer Fehlermeldung.

Auf diese Weise wird dem unterschiedlichen Ausmaß der Auswirkungen verschiedenartiger Fehler Rechnung getragen.

Nachstehend wird die Erfindung anhand eines Ausführungsbeispiels unter Bezugnahme auf eine Zeichnung näher erläutert.

In der Zeichnung zeigen:
FIG 1 den Auszug aus einem Blockschaltbild eines digitalen Fernmeldenetzes,
FIG 2 den Aufbau einer einzelnen Informationszelle,
FIG 3 aus solchen Informationszellen gebildete Informationszellenblöcke mit zugeordneter Überwachungszelle, wie sie in Teilbereichen dieses Fernmeldenetzes auftreten.

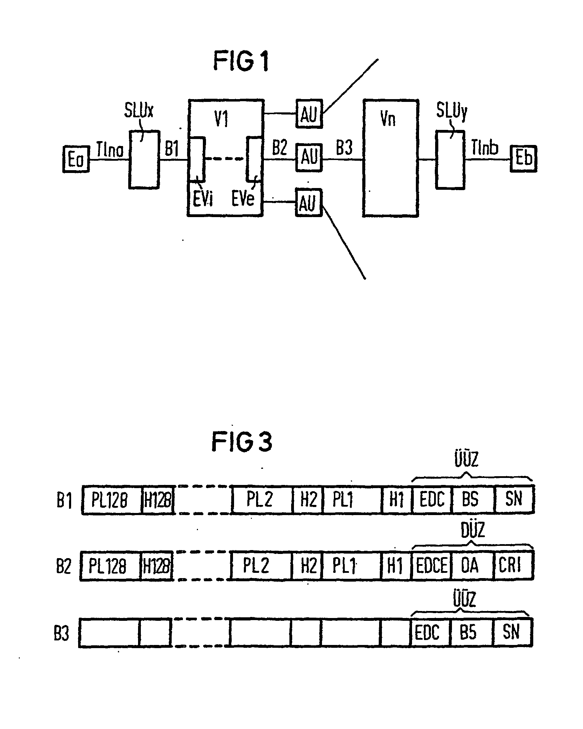

In der FIG 1 sind von einem digitalen Fernmeldenetz zwei Vermittlungsstellen V1 und Vn gezeigt, bei denen es sich um im asynchronen Transfermodus arbeitende, also um ATM-Vermittlungsstellen handeln soll.

Bei der Vermittlungsstelle V1 ist der Anschluß einer mit einem Endgerät Ea verbindenden Teilnehmeranschlußleitung Tln über eine Leitungseinheit SLUx gezeigt. Ferner sind Verbindungen dieser Vermittlungsstelle mit weiteren Vermittlungsstellen angedeutet, insbesondere die Verbindung mit der Vermittlungsstelle Vn, die über Schnittstelleneinheiten AU laufen. Bei der Vermittlungsstelle Vn ist der Anschluß einer mit einem Endgerät Eb verbindenden Teilnehmeranschlußleitung Tlnb über eine Leitungseinheit SLUy gezeigt.

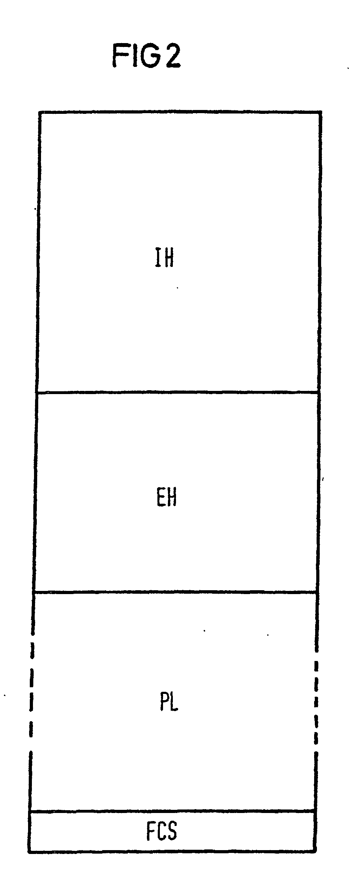

Im Zuge einer Verbindung des Endgerätes Ea mit dem Endgerät Eb werden die vom Endgerät Ea stammenden Informationen, bei denen es sich um Sprachinformationen handeln möge, innerhalb der Leitungseinheit SLUx einer Paketier-/Depaketiereinrichtung zugeführt, die diese Informationen in Informationszellen einordnen, deren Aufbau anhand FIG 2 nachstehend erläutert wird.

Eine Standardinformationszelle, wie sie in FIG 2 dargestellt ist, weist insgesamt 62 sogenannte Octetts, d.h. Zeitplätze für jeweils 8 Bit auf. 8 solcher Octetts werden für einen internen Zellenkopf IH eingenommen, der im wesentlichen ein Synchronisationsoctett, ferner Wegeinformationen für den Weg durch das Koppelfeld enthaltende Octetts, sowie ein Octett für eine Zellennummer zur Bestimmung der Zellenreihenfolge enthält. Ein weiterer Zellenkopf, der externe Zellenkopf EH, umfaßt 5 Octetts und enthält Angaben über einen virtuellen Kanal und einen virtuellen Verbindungsweg, dem die betreffende Nachrichtenzelle zugeordnet ist. Es schließt sich ein 48 Octetts umfassender Informatsteil PL an, in dem die eigentlichen Fernmeldeinformationen übertragen werden und schließlich folgt noch ein Octett FCS, das das Zellenende kennzeichnet.

Der vorerwähnte interne Zellenkopf IH wird nach Durchlaufen einer Vermittlungstelle vor einer Weiterübertragung der Informationszelle entfernt, so daß extern in Erscheinung tretende Zellen lediglich aus dem externen Zellenkopf EH und aus dem Informationsteil PL bestehen.

Wie B1 in FIG 3 zeigt, ist jeweils Blöcken von hier 128 externen Informationszellen, also aus externem Zellenkopf EH und Informationsteil PL bestehenden Informationszellen, eine Überwachungszelle ÜÜZ zugeordnet, die eine Angabe SN zur Identifizierung der Reihenfolge der Überwachungszelle, eine Angabe BS über die Länge des zugeordneten Informationszellenblocks und ein Fehlererkennungskodewort EDC enthält. Das Fehlererkennungskodewort ist über die Gesamtheit der Octetts der 128 externen Informationszellen gebildet. Aufgrund der erwähnten Überwachungszelle ÜÜZ kann die ordnungsgemäße Übertragung solcher Nachrichtenblöcke zwischen Leitungseinheiten wie den erwähnten Leitungseinheiten SLUx und SLUy und den betreffenden Vermittlungsstellen, sowie zwischen diesen Vermittlungsstellen überwacht werden. Entsprechend einem CCITT-Vorschlag wird hierzu jeweils am Endpunkt einer Übertragungsstrecke, also beispielsweise an der Eingangsgrenze der Vermittlungsstelle V1 aufgrund des Inhalts der Informationszellen des dort empfangenen Informationszellenblocks ein Fehlererkennungskodewort gebildet und mit dem mitübertragenen Fehlererkennungskodewort EDC der Überwachungszelle ÜÜZ des Zellenblocks verglichen. Im Falle einer Nichtübereinstimmung erfolgt eine Fehlermeldung in Rückwärtsrichtung zumindest an den Ursprungsort der betreffenden Übertragungsstrecke, hier also zu der Leitungseinheit SLUx, die dem Bereich der Vermittlungsstelle V1 zugehörig ist.

Die Übertragungsüberwachungszelle ÜÜZ wird vor dem Durchgang durch die Vermittlungsstelle entfernt, da das Fehlererkennungskodewort wegen der Änderung der erwähnten Angaben über den virtuellen Kanal und den virtuellen Verbindungsweg nach Durchlaufen der Vermittlungstelle keine Gültigkeit mehr hat. An der Ausgangsgrenze der Vermittlungsstelle, also am Ursprungsort einer weiteren Übertragungsstrecke wird die Übertragungsüberwachungszelle ÜÜZ und insbesondere deren Fehlerekennungskodewort erneut gebildet und zusammen mit dem zugehörigen Informationsblock weiterübertragen.

Um die Qualität der Verbindungen innerhalb der Vermittlungsstellen überprüfen zu können, wird erfindungsgemäß an der Zugangsgrenze einer solchen Vermittlungsstelle, im dargestellten Fall der FIG 1, z.B. bei der Vermittlungsstelle V1, durch eine eingangsseitige Funktionseinheit EVi eine Überwachungszelle DÜZ gebildet. Sie enthält ein Fehlererkennungskodewort EDZE, bei dessen Bildung jedoch lediglich die Informationszellen PL des zugeordneten, ebenfalls 128 Informationszellen umfassenden Informationszellenblockes berücksichtigt werden. Nach Durchgang des Informationszellenblockes durch die Vermittlungsstelle wird durch eine Funktionseinheit EVe nochmals ein solches Fehlererkennungskodewort gebildet und mit dem mitübertragenen Informationswort EDCE verglichen. Im Falle einer Nichtübereinstimmung erfolgt eine Fehlermeldung an die für die betreffende Vermittlungsstelle zuständige Wartungsstelle.

Vor der Weiterübertragung des Informationszellenblockes wird die Durchgangsüberwachungszelle DÜZ durch die neu gebildete vorerwähnte Übertragungsüberwachungszelle ÜÜZ ersetzt.

Gemäß einer weiteren Ausgestaltung der Erfindung wird jeweils an der Zugangsgrenze zu einer Vermittlungsstelle, also im Falle der Vermittlungsstelle V1 durch die Funktionseinheit EVi in die Durchgangsüberwachungszelle DÜZ außerdem eine auf den Vermittlungsstellenzugang bezogene Ursprungsadresse eingefügt. Am Vermittlungsstellenausgang, also wieder durch die Funktionseinheit EVe, wird dann eine Überwachung auf das Auftreten der betreffenden erwarteten Ursprungsadresse vorgenommen. Auf diese Art und Weise können fehlerhaft entstandene Doppelverbindungen und Verbindungsunterbrechungen erkannt werden.

Um auch schon während des Verbindungsaufbaus eine derartige Prüfung vornehmen zu können (Verbindungsweg-Durchschalteprüfung) ist in die Durchgangsüberwachungszellen (DÜZ) ferner ein Prüfkennzeichen CRI eingefügt, das im Verbindsungsaufbauzustand die Informationszellen des zugehörigen Informationszellenblocks als Leerzellen kennzeichnet und damit die Auswertung bzw. Neubildung eines Fehlererkennungswortes EDCE verhindert.

Auch diese Teile der Durchgangsüberwachungszelle DÜZ werden an der Austrittsgrenze der Vermittlungsstelle entfernt.

Die vorerwähnten Fehlermeldungen entweder vom Endpunkt der virtuellen Verbindung zurück an deren Anfangspunkt oder von der Austrittsgrenze einer Vermittlung an die für diese Vermittlungsstelle zuständige Wartungsstelle werden, sofern sie eine Informationsverfälschung betreffen, die durch Vergleich eines ursprünglich gebildeten und eines neu gebildeten Fehlererkennungscodewortes offenbar wird, erst dann abgegeben, wenn ein solcher Fehler in vorgegebener Anzahl innerhalb einer bestimmten Zeitspanne mehrfach aufgetreten ist. Fehler hingegen, die Doppelverbindungen und dergleichen betreffen, die mit Hilfe der erwähnten Ursprungsadresse erkannt werden, führen zu einer sofortigen Meldung.

## Patentansprüche

1. Verfahren zur Überwachung von virtuellen Verbindungen innerhalb eines digitalen Fernmeldenetzes, das aus im asynchronen Transfermodus (ATM) arbeitenden Vermittlungsstellen gebildet ist, über die auch im synchronen Transfermodus (STM) übertragene Informationen vermittelt werden können, demgemäß
a) jeweils am Ursprungsort der virtuelle Verbindungen führenden Übertragungsstrecken den zu übertragenden jeweils einen Kopfteil und einen Informationsteil umfassenden Informationszellenblöcken Übertragungsüberwachungszellen (ÜÜZ) zugeordnet werden, die ein Fehlererkennungskodewort (EDC) und ggf. ein Reihenfolgekennzeichen (Sn) sowie eine Angabe (S) über die Länge des Informationszellenblockes enthalten,
b) jeweils am Endpunkt der betreffenden Übertragungsstrecke durch erneute Bildung eines Fehlererkennungskodewortes und durch Vergleich desselben dem vom Ursprungsort her übertragenen Fehlerekennungskodewort (EDC) eine Auswertung erfolgt, durch die eine Informationsverfälschung erkannt werden kann und
c) im Fehlerfall eine Meldung zumindest an den Ursprungsort der betreffenden Übertragungsstrecke vorgenommen wird,
**dadurch gekennzeichnet, daß**
d) jeweils an der Zugangsgrenze einer solchen Vermittlungsstelle (V1) unter ausschließlicher Erfassung der Informationsteile (PL) der Informationszellen der Informationszellenblöcke Fehlererkennungsworte (EDCE) gebildet und als Bestandteil von Durchgangsüberwachungszellen (DÜZ) durch die Vermittlungsstelle hindurch übertragen werden und an der Austrittsgrenze der Vermittlungsstelle ausgewertet werden und bei einem hierbei festgestellten Fehler eine betreffende Fehlermeldung an die hierfür zuständige Wartungsstelle abgegeben wird,
e) vor Passieren der Austrittsgrenze durch Informationszellenblöcke die Durchgangsüberwachungszellen (DÜZ) durch erneut Übertragungsüberwachungszellen (ÜÜZ) ersetzt werden, deren Fehlererkennungskodewort (EDC) jeweils den gesamten betreffenden Informationszellenblock erfaßt.

2. Verfahren nach Anspruch 1,
**dadurch gekennzeichnet, daß**
a) jeweils an der Zugangsgrenze (EVi) zu einer Vermittlungsstelle (V1) in die Durchgangsüberwachungszellen (DÜZ) ferner eine auf den Vermittlungsstellenzugang bezogene Ursprungsadresse (OA) eingefügt wird,
b) an den Vermittlungsstellenausgängen (EVe) eine Überwachung auf das jeweilige Auftreten der betreffenden erwarteten Ursprungsadresse erfolgt, und daß
c) an der Zugangsgrenze darüber hinaus ein Prüfkennzeichen (CRI) in die Durchgangsüberwachungszellen (DÜZ) eingefügt wird, das im Verbindungsaufbauzustand die Informationszellen des zugehörigen Informationszellenblockes als Leerzellen kennzeichnet und die Auswertung bzw. Neubildung eines Fehlererkennungscodewortes verhindert.

3. Verfahren nach Anspruch 1 und 2,
**dadurch gekennzeichnet,**
**daß** eine Fehlermeldung aufgrund der Nichtübereinstimmung verglichener Fehlererkennungscodeworte (EDCE) von Durchgangsüberwachungszellen (DÜZ) erst nach mehrmaliger Wiederholung einer Nichtübereinstimmung, eine Fehlermeldung aufgrund des Ausbleibens einer Ursprungsadresse (OA) oder aufgrund des Empfangs einer anderen als der erwarteten Ursprungsadresse jedoch sofort abgegeben wird.

## Claims

1. Method for monitoring virtual connections within a digital telecommunications network, which is formed from exchanges which work using the asynchronous transfer mode (ATM) and via which exchanges information which is transmitted in the synchronous transfer mode (STM) can also be transmitted, according to which
a) in each case at the point of origin of the transmission paths which carry virtual connections, the information cell blocks which are to be transmitted and each comprise a header part and an information part are allocated transmission monitoring cells (ÜÜZ), which contain an error identification code word (EDC) and, possibly, a sequence identification (Sn) as well as an indication (S) of the length of the information cell block,
b) in each case at the end of the relevant transmission path, an evaluation is carried out by renewed formation of an error identification code word and by comparison of this code word [lacuna] the error identification code word (EDC) transmitted from the point of origin, by means of which evaluation information corruption can be identified, and
c) in the event of an error, a message is sent at least to the point of origin of the relevant transmission path,
**characterized in that**
d) in each case at the access boundary of such an exchange (V1), error identification words (EDCE) are formed with exclusive recording of the information parts (PL) of the information cells of the information cell blocks, and are transmitted as a component of transmission monitoring cells (DÜZ) through the exchange and are evaluated at the output boundary of the exchange and, if an error is found in the process, a relevant error message is emitted to the maintenance centre which is responsible for it,
e) before information cell blocks pass through the output boundary, the transmission monitoring cells (DÜZ) are replaced by renewed transmission monitoring cells (ÜÜZ), whose error identification code word (EDC) in each case records the entire relevant information cell block.

2. Method according to Claim 1,
**characterized in that**
a) in each case at the access boundary (EVi) to an exchange (V1), a source address (OA), which is related to the exchange access, is furthermore inserted into the transmission monitoring cells (DÜZ),
b) monitoring for the respective occurrence of the relevant expected source address is carried out at the exchange outputs (EVe), and **in that**
c) a test character (CRI) is furthermore inserted into the transmission monitoring cells (DÜZ) at the access boundary and, in the state when a connection is being set up, identifies the information cells of the associated information cell block as empty cells, and prevents the evaluation and/or reformation of an error identification code word.

3. Method according to Claim 1 or 2,
**characterized**
**in that** an error message on the basis of noncorrespondence between compared error identification code words (EDCE) of transmission monitoring cells (DÜZ) is, however, emitted immediately only after several repetitions of a noncorrespondence, or an error message is emitted as a result of the continued lack of a source address (OA), or on the basis of the reception of a source address other than that which was expected.

## Revendications

1. Procédé pour surveiller des liaisons virtuelles dans un réseau de télécommunications numériques qui est formé de centraux de commutation qui travaillent dans le mode de transfert asynchrone (MTA) et qui peuvent commuter aussi des informations transmises dans le mode transfert synchrone (MTS), suivant lequel
a) on associe respectivement, au lieu d'origine des voies de transmission guidant des liaisons virtuelles, à des blocs de cellules d'informations à transmettre comportant respectivement une partie d'en-tête et une partie d'information des cellules (ÜÜz) de surveillance de transmission qui contiennent un mot (EDC) de code de reconnaissance d'erreur et éventuellement un signe (SN) caractéristique de séquence ainsi qu'un indication (S) sur la longueur du bloc de cellules d'informations,
b) on effectue respectivement au point d'extrémité de la voie de transmission concernée, en reformant un mot de code de reconnaissance d'erreur et en le comparant au mot (EDC) de code de reconnaissance d'erreur transmis du lieu d'origine, une évaluation par laquelle une falsification d'information peut être reconnue et
c) dans le cas d'une erreur, on effectue un avertissement adressé au moins au lieu d'origine de la voie de transmission concernée,
**caractérisé en ce que**
d) on forme respectivement à la limite d'accès d'un central (V1) de commutation de ce genre, en prenant exclusivement les parties (PL) d'informations des cellules d'informations des blocs de cellules d'informations, des mots (EDCE) de reconnaissance d'erreur et on les transmet comme constituants de cellules (DÜZ) de surveillance de passage en passant par le central de commutation et on les exploite à la limite de sortie du central de commutation et, dans le cas d'une erreur qui est constatée, on émet un avertissement d'erreur qui s'y rapporte au poste d'entretien compétent à cet effet,
e) avant le passage de la limite de sortie par des blocs de cellules d'informations, on remplace les cellules (DÜZ) de surveillance de passage par des cellules (ÜÜz) de surveillance de transmission renouvelées dont le mot (EDC) de code de reconnaissance d'erreur détecte respectivement tout le bloc de cellules d'informations concerné.

2. Procédé suivant la revendication 1,
**caractérisé en ce que**,
a) on insère respectivement, à la limite (EVi) d'accès à un central (V1) de commutation, dans les cellules (DÜZ) de surveillance de passage de plus une adresse (OA) d'origine liée à l'accès au central de commutation,
b) on effectue, aux sorties (EVe) de central de commutation, une surveillance pour déterminer l'apparition de l'adresse d'origine attendue concernée, et **en ce que**
c) on insère, à la limite d'accès, de plus, dans les cellules (DÜZ) de surveillance de passage un signe (CRI) caractéristique de vérification qui, en l'état d'établissement de liaison, caractérise comme cellules vides les cellules d'informations du bloc de cellules d'informations associé et empêche l'exploitation et la reformation d'un mot de code de reconnaissance d'erreur.

3. Procédé suivant les revendications 1 et 2, **caractérisé en ce que**,
un avertissement d'erreur en raison de la non-coïncidence de mot (EDCE) de code de reconnaissance d'erreur comparé des cellules (DÜZ) de surveillance de passage ne s'effectue qu'après multiples répétitions d'une non-coïncidence, mais un avertissement d'erreur en raison de l'absence d'une adresse (OA) d'origine ou en raison de la réception d'une adresse d'origine autre que celle attendue s'effectue immédiatement.
